# EUROPEAN PATENT SPECIFICATION

(11) **EP 3 577 822 B1**
(45) Date of publication and mention of the grant of the patent: **14.08.2024**
(21) Application number: 18748259.1
(22) Date of filing: 06.02.2018
(51) Int. Cl.: H04L 1/18, H04L 1/00, H04L 5/00

(54) **RETRANSMISSION MECHANISMS FOR CBG-BASED HARQ OPERATIONS**
NEUÜBERTRAGUNGSMECHANISMEN FÜR CBG-BASIERTE HARQ-OPERATIONEN
MÉCANISMES DE RETRANSMISSION POUR OPÉRATIONS HARQ BASÉES SUR DES GROUPES DE BLOCS DE CODES (CBG)

(30) Priority: 06.02.2017 US 201762455214 P
(43) Date of publication of application: 11.12.2019
(73) Proprietor: Apple Inc., Cupertino, CA 95014 (US)
(72) Inventor: XIONG, Gang, Beaverton Oregon 97006 (US); KWON, Hwan-Joon, Portland, OR 97229 (US); NIMBALKER, Ajit, Fremont California 94538 (US); HE, Hong, Beijing 100190 (CN); HAN, Seunghee, San Jose California 95120 (US); KWAK, Yongjun, Portland Oregon 97229 (US); LEE, Dae Won, Portland Oregon 97229 (US); DAVYDOV, Alexei Vladimirovich, Nizhny Novgorod 603132 (RU); KHORYAEV, Alexey Vladimirovich, Nizhny Novgorod 603105 (RU)
(74) Representative: Lang, Johannes
(86) International application number: PCT/US2018/017032
(87) International publication number: WO 2018/145078

(56) References cited:
- WO-A1-2018/128369
- WO-A2-2018/129017
- US-A1- 2012 005 550
- US-A1- 2013 294 357
- US-A1- 2016 226 643
- US-B2- 8 793 562
- US-B2- 9 294 959
- US-B2- 9 461 778
- SAMSUNG: "TB/CB Handling for eMBB", vol. RAN WG1, no. Spokane, USA; 20170116 - 20170120, 16 January 2017 (2017-01-16), XP051208474, Retrieved from the Internet <URL:http://www.3gpp.org/ftp/Meetings_3GPP_SYNC/RAN1/Docs/> [retrieved on 20170116]

## Description

### Priority Claim

This application claims priority to United States Provisional Patent Application Serial No.62/455,214 filed February 6, 2017.

### Technical Field

Embodiments described herein relate generally to wireless networks and communications systems. Some embodiments relate to cellular communication networks including 3GPP (Third Generation Partnership Project) networks, 3GPP LTE (Long Term Evolution) networks, 3GPP LTE-A (LTE Advanced), and 3GPP fifth generation (5G) or new radio (NR) networks, although the scope of the embodiments is not limited in this respect.

### Background

Mobile wireless communications systems have evolved from early voice-only systems to today's highly sophisticated integrated communication platforms in which fourth generation (4G) LTE networks provide data for massive mobile services. Next generation (a.k.a, fifth generation (5G) or new radio (NR)) technology is being developed to meet the increased future demands brought about by use cases such as enhanced mobile broadband, ultra-reliable and low-latency communications, and machine-to-machine communications for enabling the Internet of Things (IoT). 5G technology builds on a combination of existing 4G and new technologies to meet these demands.

3GPP draft R1-1700958 by Samsung, "TB/CB Handling for eMBB", January 16, 2017, discusses the TB/CB handling with different scheduling units (mini-slot or slot, single or multiple slots) and the corresponding HARQ-ACK feedback/retransmission mechanism for eMBB. The impact of URLLC is also considered.

US 2016/226643 A1 relates to code block cluster level HARQ.

WO 2018/128369 A1 belongs to the prior-art under Article 54(3) EPC and discloses a UE which detects a PDCCH on a configured control resource set. The UE analyzes the detected PDCCH, and determines a method for dividing code blocks, CBs, and a method for rate matching of a PDSCH, and receives the PDSCH accordingly.

WO 2018/129017 A2 belongs to the prior-art under Article 54(3) EPC and discloses systems, methods, and instrumentalities for receiver feedback in wireless systems.

There is a need for improved retransmission mechanisms for CBG-based HARG operations.

### Summary of invention

It is an object of the present invention to eliminate or at least alleviate the described problems. This object is achieved by a method in accordance with appended claim 1. Preferred embodiments are defined in the dependent claims.

### Brief Description of the Drawings

FIG. 1 is a block diagram of a radio architecture in accordance with some embodiments.
FIG. 2 illustrates a front-end module circuitry for use in the radio architecture of FIG. 1 in accordance with some embodiments.
FIG. 3 illustrates a radio IC circuitry for use in the radio architecture of FIG. 1 in accordance with some embodiments.
FIG. 4 illustrates a baseband processing circuitry for use in the radio architecture of FIG. 1 in accordance with some embodiments.
FIG. 5 illustrates an example of a computing machine such as an evolved Node B (eNB) or next generation evolved node B (gNB) according to some embodiments.
FIG. 6 illustrates an example of a user equipment (UE) device according to some embodiments.
FIG. 7 illustrates an example UE and a base station (BS) such as an eNB or gNB according to some embodiments.
FIG. 8 illustrates an example of hybrid automatic repeat request feedback based on code block groups according to some embodiments.
FIG. 9 illustrates an example of mini-slot based transmission and retransmission according to some embodiments.
FIG. 10 illustrates an example of a signaling mechanism for retransmissions according to some embodiments.
FIG. 11 illustrates an example of using a single physical downlink control channel to schedule transmission of a new transport block and retransmission of code block groups according to some embodiments.
FIG. 12 illustrates an example of using a single physical downlink control channel to schedule transmission of a new transport block and retransmission of code block groups according to some embodiments.
FIG. 13 illustrates an example of using independent physical downlink control channels to schedule transmission of a new transport block and retransmission of code block groups in the same slot according to some embodiments.
FIG. 14 illustrates an example of using independent physical downlink control channels to schedule transmission of a new transport block and retransmission of code block groups in the same slot using a mini-slot structure according to some embodiments.

### Detailed Description

Mobile communication has evolved significantly from early voice systems to today's highly sophisticated integrated communication platform. The next generation wireless communication system, 5G, or new radio (NR) will provide access to information and sharing of data anywhere, anytime by various users and applications. 5G is expected to be a unified network/system that are targeted to meet vastly different and sometime conflicting performance dimensions and services. Such diverse multi-dimensional requirements are driven by different services and applications. In general, 5G will evolve based on 3GPP LTE-Advanced with additional potential new Radio Access Technologies (RATs) to enrich people lives with better, simple and seamless wireless connectivity solutions. 5G will enable everything connected by wireless and deliver fast, rich contents and services.

For NR, higher data rates will continue to be a key driver in network development and evolution for 5G systems. It is envisioned that a peak data rate of more than 10Gps and a minimum guaranteed user data rate of at least 100Mbps should be supported for NR systems. To support the higher data rates for NR, a larger system bandwidth is envisioned, especially for carrier frequencies above 6 GHz. In these cases, it is expected that a large number of code blocks for one transport block could be transmitted in one slot due to the larger system bandwidth, higher MIMO order, and/or higher modulation order.

In the existing LTE specifications, a one bit hybrid automatic repeat request acknowledgement (ACK) or non-acknowledgement NACK, both referred to herein as a HARQ-ACK, is used to indicate whether a single transport block (TB) is successfully decoded. Given that a large number of code blocks would be supported in NR, one bit ACK or NACK feedback for one transport block may not be desirable, especially when considering the retransmission. In the case when the receiver fails to decode the transport block and feeds back a NACK to the transmitter, the transmitter would retransmit the whole transport block which would consume a substantial amount of resources for retransmission. Described herein are mechanisms for utilizing HARQ-ACKs based upon code blocks (CBs) or groups of CBs, referred to as code block groups (CBGs), to more efficiently retransmit and receive unsuccessfully decoded data.

### Example Radio Architecture

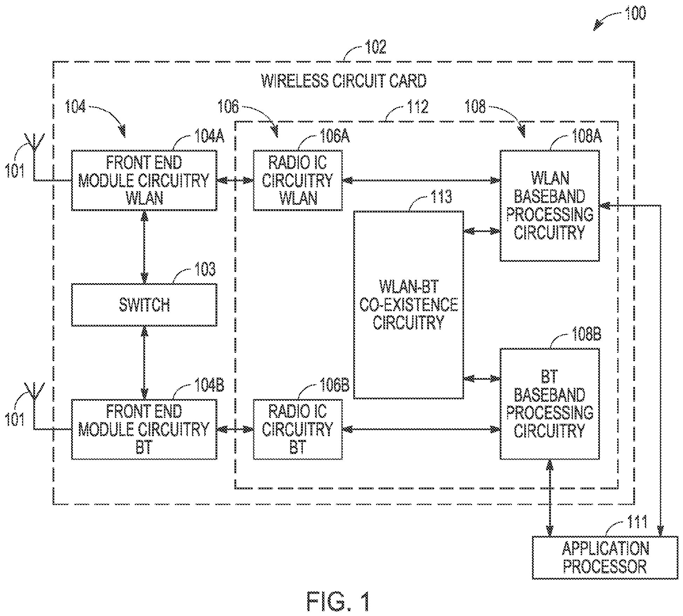

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104B may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 102, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM 104A and FEM 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106a may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry, and may further interface with application processor 110 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or integrated circuit (IC), such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, 802.11n-2009, IEEE 802.11-2012, 802.11n-2009, 802.11ac, and/or 802.11ax standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.11ax standard. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards

In some embodiments, the radio-architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

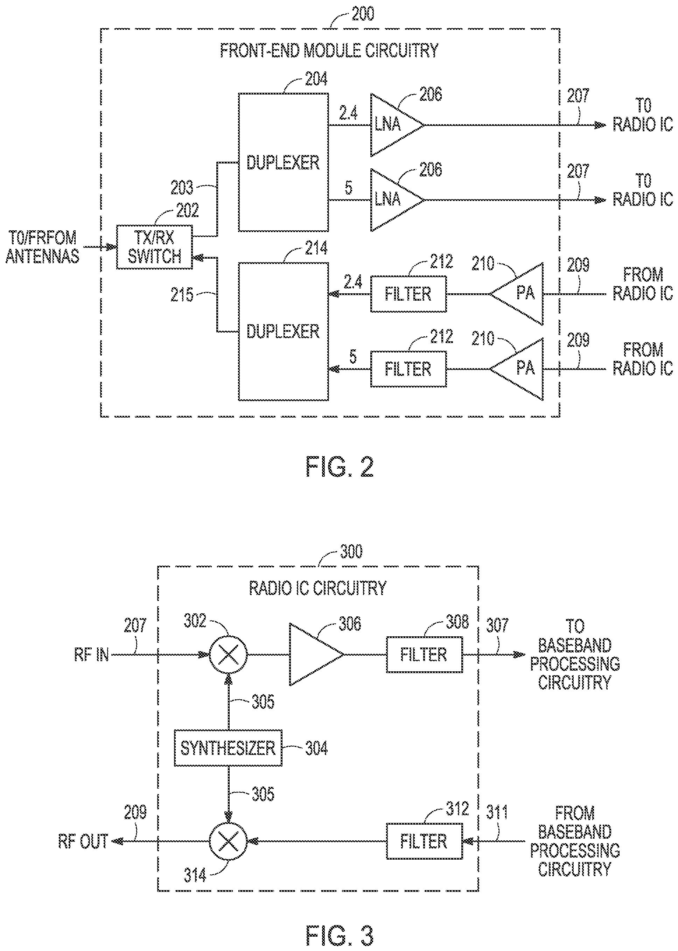

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

FIG. 3 illustrates radio IC circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety degree time-varying LO switching signals provided by a quadrature circuitry which may be configured to receive a LO frequency (f_{LO}) from a local oscillator or a synthesizer, such as LO frequency 305 of synthesizer 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 3 1 1 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 110 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 110.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (fro).

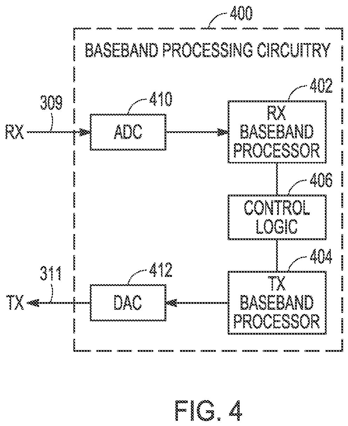

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108a, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio-architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

### Example Machine Description

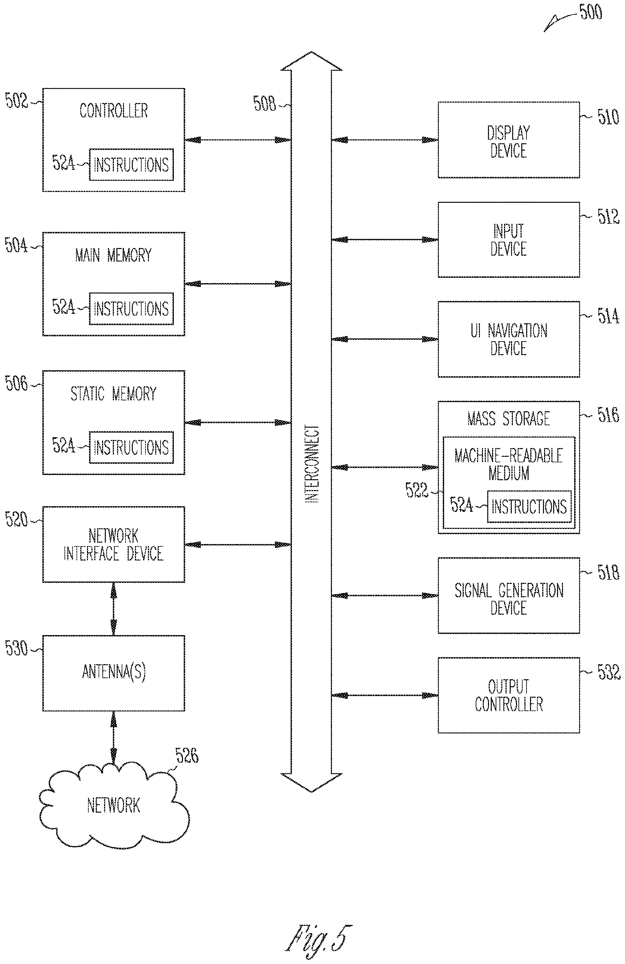

FIG. 5 illustrates a block diagram of an example machine 500 upon which any one or more of the techniques (e.g., methodologies) discussed herein may performed. In alternative embodiments, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environment. The machine 500 may be a user equipment (UE), evolved Node B (eNB), next generation evolved Node B (gNB), next generation access network (AN), next generation user plane function (UPF), Wi-Fi access point (AP), Wi-Fi station (STA), personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 500 may include a hardware processor 502 (e.g., a central processing unit (CPU), a graphics processing unit (GPU), a hardware processor core, or any combination thereof), a main memory 504 and a static memory 506, some or all of which may communicate with each other via an interlink (e.g., bus) 508. The machine 500 may further include a display unit 510, an alphanumeric input device 512 (e.g., a keyboard), and a user interface (UI) navigation device 514 (e.g., a mouse). In an example, the display unit 510, input device 512 and UI navigation device 514 may be a touch screen display. The machine 500 may additionally include a storage device (e.g., drive unit) 516, a signal generation device 518 (e.g., a speaker), a network interface device 520, and one or more sensors 521, such as a global positioning system (GPS) sensor, compass, accelerometer, or other sensor. The machine 500 may include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 516 may include a machine readable medium 522 on which is stored one or more sets of data structures or instructions 524 (e.g., software) embodying or utilized by any one or more of the techniques or functions described herein. The instructions 524 may also reside, completely or at least partially, within the main memory 504, within static memory 506, or within the hardware processor 502 during execution thereof by the machine 500. In an example, one or any combination of the hardware processor 502, the main memory 504, the static memory 506, or the storage device 516 may constitute machine readable media.

While the machine readable medium 522 is illustrated as a single medium, the term "machine readable medium" may include a single medium or multiple media (e.g., a centralized or distributed database, and/or associated caches and servers) configured to store the one or more instructions 524.

The term "machine readable medium" may include any medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Nonlimiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 524 may further be transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 520 may include one or more physical jacks (e.g., Ethernet, coaxial, or phone jacks) or one or more antennas to connect to the communications network 526. In an example, the network interface device 520 may include a plurality of antennas to wirelessly communicate using at least one of single-input multiple-output (SIMO), multiple-input multiple-output (MIMO), or multiple-input single-output (MISO) techniques. In some examples, the network interface device 520 may wirelessly communicate using Multiple User MIMO techniques. The term "transmission medium" shall be taken to include any intangible medium that is capable of storing, encoding, or carrying instructions for execution by the machine 500, and includes digital or analog communications signals or other intangible medium to facilitate communication of such software.

### Example UE Description

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

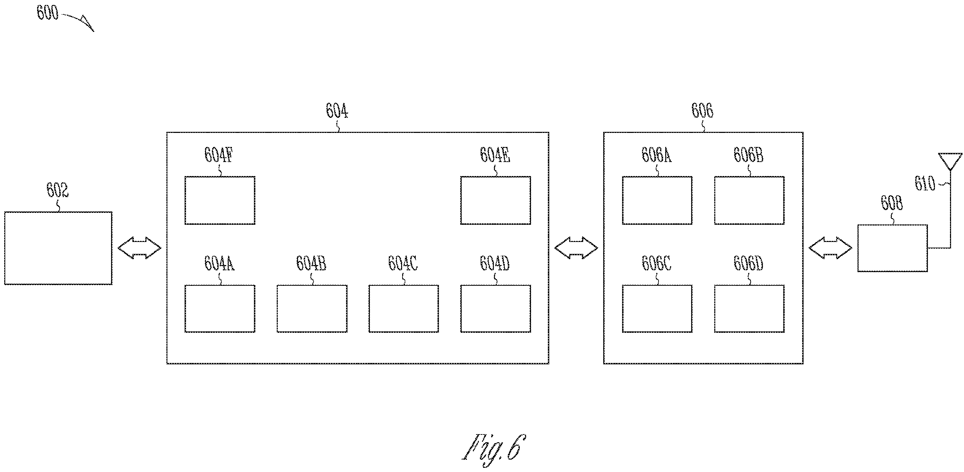

Embodiments described herein may be implemented into a system using any suitably configured hardware and/or software. FIG. 6 illustrates, for one embodiment, example components of a User Equipment (UE) device 600. In some embodiments, the UE device 600 may include application circuitry 602, baseband circuitry 604, Radio Frequency (RF) circuitry 606, front-end module (FEM) circuitry 608 and one or more antennas 610, coupled together at least as shown.

The application circuitry 602 may include one or more application processors. For example, the application circuitry 602 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 604 may include circuitry such as, but not limited to, one or more single-core or multi-core processors. The baseband circuitry 604 may include one or more baseband processors and/or control logic to process baseband signals received from a receive signal path of the RF circuitry 606 and to generate baseband signals for a transmit signal path of the RF circuitry 606. Baseband processing circuity 604 may interface with the application circuitry 602 for generation and processing of the baseband signals and for controlling operations of the RF circuitry 606. For example, in some embodiments, the baseband circuitry 604 may include a second generation (2G) baseband processor 604a, third generation (3G) baseband processor 604b, fourth generation (4G) baseband processor 604c, and/or other baseband processor(s) 604d for other existing generations, generations in development or to be developed in the future (e.g., fifth generation (5G), 6G, etc.). The baseband circuitry 604 (e.g., one or more of baseband processors 604a-d) may handle various radio control functions that enable communication with one or more radio networks via the RF circuitry 606. The radio control functions may include, but are not limited to, signal modulation/demodulation, encoding/decoding, radio frequency shifting, etc. In some embodiments, modulation/demodulation circuitry of the baseband circuitry 604 may include Fast-Fourier Transform (FFT), precoding, and/or constellation mapping/demapping functionality. In some embodiments, encoding/decoding circuitry of the baseband circuitry 604 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 604 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 604e of the baseband circuitry 604 may be configured to run elements of the protocol stack for signaling of the PHY, MAC, RLC, PDCP and/or RRC layers. In some embodiments, the baseband circuitry may include one or more audio digital signal processor(s) (DSP) 604f. The audio DSP(s) 604f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 604 and the application circuitry 602 may be implemented together such as, for example, on a system on a chip (SOC).

In some embodiments, the baseband circuitry 604 may provide for communication compatible with one or more radio technologies. For example, in some embodiments, the baseband circuitry 604 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 604 is configured to support radio communications of more than one wireless protocol may be referred to as multi-mode baseband circuitry.

RF circuitry 606 may enable communication with wireless networks using modulated electromagnetic radiation through a non-solid medium. In various embodiments, the RF circuitry 606 may include switches, filters, amplifiers, etc. to facilitate the communication with the wireless network. RF circuitry 606 may include a receive signal path which may include circuitry to down-convert RF signals received from the FEM circuitry 608 and provide baseband signals to the baseband circuitry 604. RF circuitry 606 may also include a transmit signal path which may include circuitry to up-convert baseband signals provided by the baseband circuitry 604 and provide RF output signals to the FEM circuitry 608 for transmission.

In some embodiments, the RF circuitry 606 may include a receive signal path and a transmit signal path. The receive signal path of the RF circuitry 606 may include mixer circuitry 606a, amplifier circuitry 606b and filter circuitry 606c. The transmit signal path of the RF circuitry 606 may include filter circuitry 606c and mixer circuitry 606a. RF circuitry 606 may also include synthesizer circuitry 606d for synthesizing a frequency for use by the mixer circuitry 606a of the receive signal path and the transmit signal path. In some embodiments, the mixer circuitry 606a of the receive signal path may be configured to down-convert RF signals received from the FEM circuitry 608 based on the synthesized frequency provided by synthesizer circuitry 606d. The amplifier circuitry 606b may be configured to amplify the down-converted signals and the filter circuitry 606c may be a low-pass filter (LPF) or band-pass filter (BPF) configured to remove unwanted signals from the down-converted signals to generate output baseband signals. Output baseband signals may be provided to the baseband circuitry 604 for further processing. In some embodiments, the output baseband signals may be zero-frequency baseband signals, although this is not a requirement. In some embodiments, mixer circuitry 606a of the receive signal path may comprise passive mixers, although the scope of the embodiments is not limited in this respect.

In some embodiments, the mixer circuitry 606a of the transmit signal path may be configured to up-convert input baseband signals based on the synthesized frequency provided by the synthesizer circuitry 606d to generate RF output signals for the FEM circuitry 608. The baseband signals may be provided by the baseband circuitry 604 and may be filtered by filter circuitry 606c. The filter circuitry 606c may include a low-pass filter (LPF), although the scope of the embodiments is not limited in this respect.

In some embodiments, the mixer circuitry 606a of the receive signal path and the mixer circuitry 606a of the transmit signal path may include two or more mixers and may be arranged for quadrature downconversion and/or upconversion respectively. In some embodiments, the mixer circuitry 606a of the receive signal path and the mixer circuitry 606a of the transmit signal path may include two or more mixers and may be arranged for image rejection (e.g., Hartley image rejection). In some embodiments, the mixer circuitry 606a of the receive signal path and the mixer circuitry 606a may be arranged for direct downconversion and/or direct upconversion, respectively. In some embodiments, the mixer circuitry 606a of the receive signal path and the mixer circuitry 606a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 606 may include analog-to-digital converter (ADC) and digital-to-analog converter (DAC) circuitry and the baseband circuitry 604 may include a digital baseband interface to communicate with the RF circuitry 606.

In some dual-mode embodiments, a separate radio IC circuitry may be provided for processing signals for each spectrum, although the scope of the embodiments is not limited in this respect.

In some embodiments, the synthesizer circuitry 606d may be a fractional-N synthesizer or a fractional N/N+1 synthesizer, although the scope of the embodiments is not limited in this respect as other types of frequency synthesizers may be suitable. For example, synthesizer circuitry 606d may be a delta-sigma synthesizer, a frequency multiplier, or a synthesizer comprising a phase-locked loop with a frequency divider.

The synthesizer circuitry 606d may be configured to synthesize an output frequency for use by the mixer circuitry 606a of the RF circuitry 606 based on a frequency input and a divider control input. In some embodiments, the synthesizer circuitry 606d may be a fractional N/N+1 synthesizer.

In some embodiments, frequency input may be provided by a voltage controlled oscillator (VCO), although that is not a requirement. Divider control input may be provided by either the baseband circuitry 604 or the applications processor 602 depending on the desired output frequency. In some embodiments, a divider control input (e.g., N) may be determined from a look-up table based on a channel indicated by the applications processor 602.

Synthesizer circuitry 606d of the RF circuitry 606 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 606d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 606 may include an IQ/polar converter.

FEM circuitry 608 may include a receive signal path which may include circuitry configured to operate on RF signals received from one or more antennas 610, amplify the received signals and provide the amplified versions of the received signals to the RF circuitry 606 for further processing. FEM circuitry 608 may also include a transmit signal path which may include circuitry configured to amplify signals for transmission provided by the RF circuitry 606 for transmission by one or more of the one or more antennas 610.

In some embodiments, the FEM circuitry 608 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 606). The transmit signal path of the FEM circuitry 608 may include a power amplifier (PA) to amplify input RF signals (e.g., provided by RF circuitry 606), and one or more filters to generate RF signals for subsequent transmission (e.g., by one or more of the one or more antennas 610.

In some embodiments, the UE device 600 may include additional elements such as, for example, memory/storage, display, camera, sensor, and/or input/output (I/O) interface.

### Descriptions of Embodiments

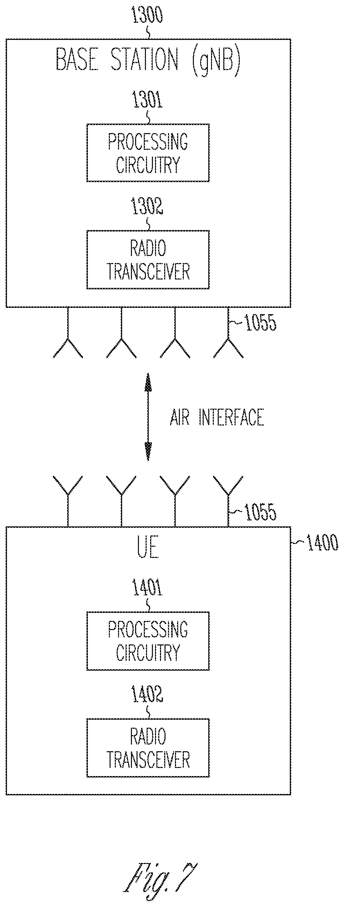

In Long Term Evolution (LTE) and 5G systems, a mobile terminal (referred to as a User Equipment or UE) connects to the cellular network via a base station (BS), referred to as an evolved Node B or eNB in LTE systems and as a next generation evolved Node B or gNB in 5G or NR systems. FIG. 7 illustrates an example of the components of a UE 1400 and a base station (e.g., eNB or gNB) 1300. The BS 1300 includes processing circuitry 1301 connected to a radio transceiver 1302 for providing an air interface. The UE 1400 includes processing circuitry 1401 connected to a radio transceiver 1402 for providing an air interface over the wireless medium. Each of the transceivers in the devices is connected to antennas 1055. The memory and processing circuitries of the UE and/or BS may be configured to perform the functions and implement the schemes of the various embodiments described herein.

The air interface for NR and LTE, also referred to as the radio interface or radio access network (RAN), has a layered protocol architecture where peer layers of the UE and gNB pass protocol data units (PDUs) between each other that are encapsulated service data units (SDUs) of the next higher layer. The topmost layer in the user plane is the packet data compression protocol (PDCP) layer that transmits and receives IP (internet protocol) packets. The topmost layer of the control plane in the access stratum between the UE and gNB is the radio resource control (RRC) layer. The PDCP layer communicates with the radio link control (RLC) layer via radio bearers to which IP packets are mapped. At the medium access control (MAC) layer, the connection to the RLC layer above is through logical channels, and the connection to the physical layer below is through transport channels. The primary UL transport channel is the uplink shared channel (UL-SCH), and the primary DL transport channel is the downlink shared channel (DL-SCH). Another DL transport channel, the broadcast channel (BCH), is used by the gNB to broadcast system information. At the physical layer, the UL-SCH is associated with the physical uplink shared channel (PUSCH), the DL-SCH is associated with the physical downlink shared channel (PDSCH), and the BCH is associated with the physical broadcast channel (PBCH). The physical layer is referred to as layer 1 or L1. The MAC, RLC, and PDCP layers are referred to as layer 2 or L2. The RRC layer, as well as the non-access stratum (NAS) layer between the UE and the core network in the control plane and user applications in the user plane, are referred to layer 3 or L3.

Data on a transport channel is organized into transport blocks. In each transmission time interval (TTI), at most one transport block of dynamic size is transmitted over the radio interface to/from a device in the absence of spatial multiplexing. In the case of spatial multiplexing (MIMO), there can be up to two transport blocks per TTI. Among other things, the MAC layer provides functionality for performing HARQ operations as described below.

The waveform used in NR is cyclic prefix orthogonal frequency division multiplexing (CP-OFDM) for the downlink (DL) and either CP-OFDM or discrete Fourier transform spread OFDM (DFT-s-OFDM) for the uplink (UL). The CP-OFDM waveform can be can be used for single-stream and multi-stream (i.e., MIMO) transmissions, while the DFT-s-OFDM based waveform is limited to single-stream transmissions only (targeting cases with a limited link budget). The NR specifications make it mandatory for UEs to support both CP-OFDM and DFT-s-OFDM, where the gNB may communicate to the UE which of the CP-OFDM or DFT-s-OFDM waveforms the UE is to use for UL transmissions. Both of the CP-OFDM and DFT-s-OFDM waveforms may have variable numerologies (e.g., subcarrier spacing and symbol duration).

NR supports both frequency division duplex and time division duplex modes to separate UL transmissions from DL transmissions. The downlink and uplink transmissions are organized into radio frames each having a duration of 10 ms, and each radio frame consists of a number of slots that depends on the particular numerology. Each slot contains 14 OFDM symbols for normal cyclic prefix (CP). Data is encoded into by an inverse DFT into frequency-domain symbols that are transmitted as time-frequency resources. Each such time-frequency resource corresponds to a particular subcarrier of a particular OFDM symbol, referred to as a resource element (RE). NR also defines a mini-slot structure, where a mini-slot is made up of more or more OFDM symbols. When a mini-slot is made up of two or more symbols, the first OFDM symbol of the mini-slot may include downlink control information (DCI) in a PDCCH in the case of a DL mini-slot for uplink control information in the case of an UL mini-slot.

When a UE is in an RRC connected state, all uplink and downlink resources are allocated by the gNB. At the physical level, those resources are segregated into separate physical channels. The gNB grants uplink resources over the PUSCH and downlink resources over the PDSCH using the physical downlink control channel (PDCCH), where an individual control message is referred to as downlink control information (DCI). A PDCCH is addressed to a particular terminal (i.e., UE) by attaching a CRC (cyclic redundancy check) to each DCI message payload. The identity of the terminal (or terminals) for which the DCI is intended is specified by a radio network temporary identifier (RNTI) that is included in the CRC calculation and not explicitly transmitted. Depending on the purpose of the DCI, different RNTIs are used, such as the terminal-specific C-RNTI (cell RNTI) for normal unicast data transmission. A terminal searches the received PDCCHs for DCIs addressed to it by checking the CRCs using its set of assigned RNTIs. The terminal blindly decodes received PDCCHs by searching elements of the PDCCH in a search space that includes a common search space (CSS) that all terminals search and may also include a terminal specific search space. The UE is allocated resources in the physical uplink control channel (PUCCH) for requesting resources for transmitting data to the eNB over the PUSCH. If the UE has not been allocated resources on the PUCCH for transmitting such a scheduling request, the UE may use a random access procedure for the scheduling request.

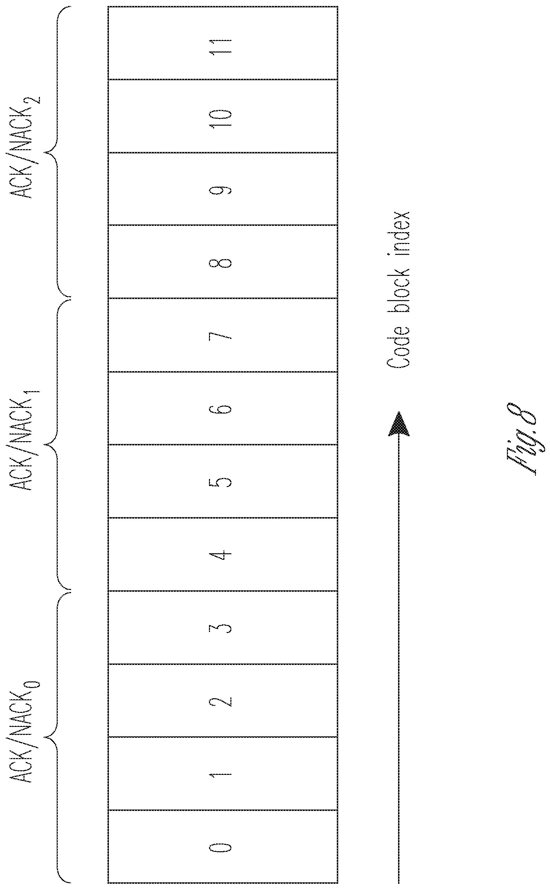

To provide finer granularity for HARQ-ACK feedback, code block specific HARQ-ACK may be employed. For example, HARQ-ACKs for multiple code blocks can be bundled to reduce HARQ-ACK feedback overhead. Furthermore, the bundled size can be semi-statically configured by higher layers. FIG. 8 illustrates one example of code block specific HARQ-ACK feedback. In this example, one transport block includes 12 code blocks and bundled size for HARQ-ACK feedback is 4. In this case, 3 HARQ-ACK bits are used to indicate whether 3 sub-transport blocks or code block groups (CBG) are successfully decoded, where each sub-transport block contain 4 code blocks.

When a gNB receives the code block (CB) or code block group (CBG) specific HARQ-ACK feedback from UE, it can schedule the retransmission of the CBGs which the UE fails to decode successfully. For proper operation, the UE needs to be informed as to the CBG index for retransmission. After correctly decoding the CBGs in retransmission, the UE can concatenate all the CBGs and deliver the transport block to the higher layers. CBG level HARQ-ACK feedback may be employed for CBGs containing one or multiple CBs. Mechanisms are described herein for signaling retransmissions of CBGs based upon CBG-based HARQ-ACK operations and for supporting the transmission of a new TB and retransmission of CBGs in the same slot.

In one embodiment, a bitmap can be included in the downlink control information (DCI) for retransmission of a CBG. Each bit in the bitmap can indicate whether a particular CBG is retransmitted, where bit 1 may indicate that the CBG is retransmitted and bit 0 may indicate that the CBG is not retransmitted. For example, assuming that 1 TB is divided into 4 CBGs, a 4 bit indicator can be included in the DCI. If the bitmap is "1010", for example, this would indicate that first and third CBGs are retransmitted.

In another embodiment, to reduce signaling overhead in the DCI, the CBG index can be implicitly indicated in the encoded bits. For example, the CBG index can be masked with a cyclic redundancy check (CRC) for the corresponding CBG. After the receiver decodes the CBG, it can then determine the CBG index from the CRC and subsequently concatenate all the CBGs according to the determined CBG index. To ensure robustness of decoding, the number of CBGs for retransmission can be explicitly included in the DCI for retransmission or implicitly derived from the other DCI information. In one example, the UE can derive the number of CBGs for retransmission from the transport block size (TBS) indicated in the initial transmission and retransmission.

In another embodiment, when the CBG transmission boundary is aligned with the duration of a mini-slot, the gNB can use the mini-slot for retransmission of the corresponding CBG(s) based on the mini-slot structure. For example, a physical downlink control channel (PDCCH) may be transmitted in each of corresponding mini-slots that are used to schedule the CBGs which are not successfully decoded by UE. The UE may need to monitor the mini-slots for the presence of a PDCCH addressed to it and the retransmission of CBGs. In this case, a CBG index is not needed in the DCI for retransmission scheduling.

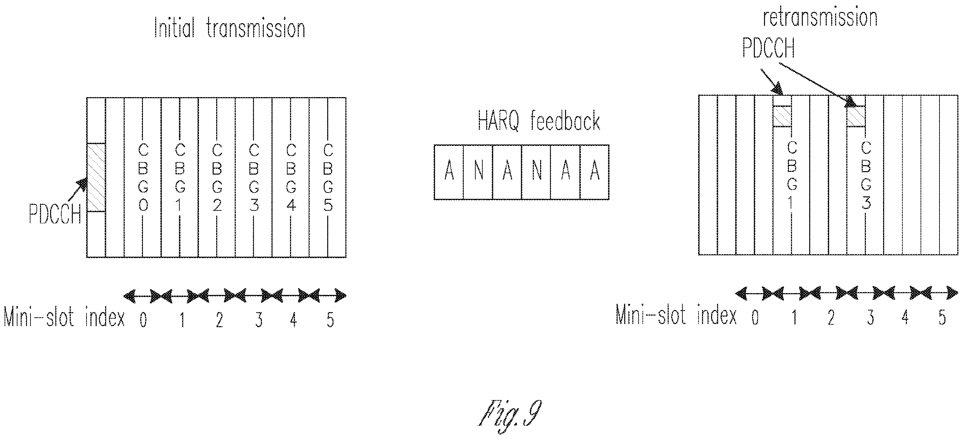

FIG. 9 illustrates one example of mini-slot based transmission and retransmission for CBG level HARQ-ACK feedback. In this example, 1 TB is divided into 6 CGBs, and the boundary of one CBG is aligned with the mini-slot duration. That is, 6 mini-slots are used within one slot, where each slot spans two symbols. Note that first of the two symbols in each mini-slot is allocated for the control region in this example. Assuming that HARQ-ACK feedback for the CBG is [ACK NACK ACK NACK ACK ACK] as shown in the FIG. 9, the gNB can schedule the retransmission for CBG#1 and CBG#3 in the corresponding mini-slot#1 and mini-slot#3, respectively, using the mini-slot structure. In this case, the gNB does not need to signal the CBG index for retransmission in the DCI, resulting in a reduction in signaling overhead.

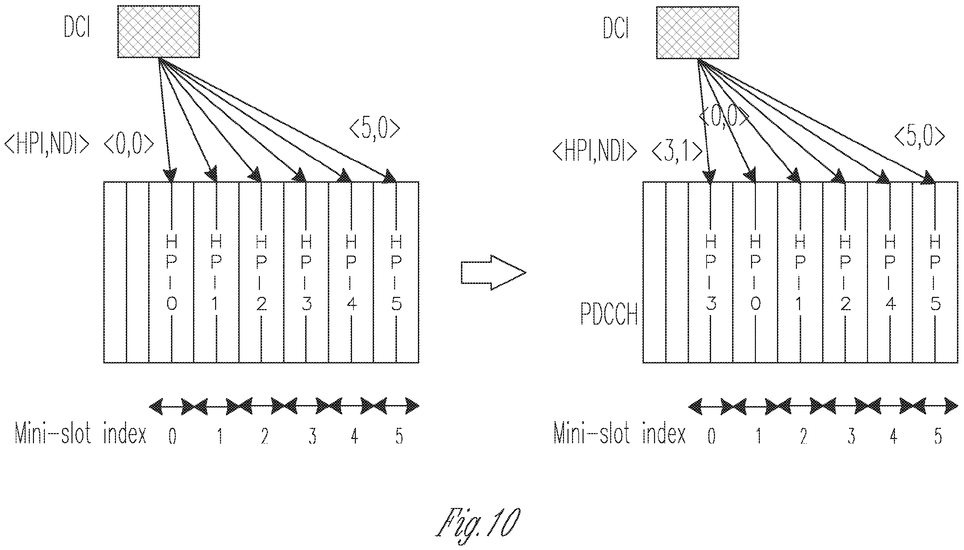

In another embodiment, a HARQ process identification (ID) and new data indicator (NDI) can be combined for each CBG to indicate whether the CBG is a new transmission or retransmission. For example, a <HPI, NDI> field can be included in the DCI for the scheduling of each CBG, where HPI denotes HARQ process ID. FIG. 10 illustrates one example of a signaling mechanism using a HARQ process ID and NDI for each CBG. In this example, the fields <HPI, NDI> associated with CBG #3 is set as <3, 1> at 2nd slot to indicate to the UE that this is a retransmission, while fields <HPI, NDI> for other CBGs are set as <X,0> to indicate it is a new transmission.

In cases where the number of active UEs in the network is small and if the gNB only schedules the retransmission of CBGs which are not correctly decoded, the remaining resources within the same slot may be wasted. In order to improve UE throughput, it is beneficial to support the transmission of a new TB and retransmission of CBGs in the same slot for a given UE. Embodiments of mechanisms to support the transmission of a new TB and retransmission of CBGs in the same slot for a given UE are provided as follows.

In one embodiment, a single DL control channel can be used to schedule the transmission of a new TB and retransmission of CBGs in the same slot. Assuming that the transmission of the new TB and retransmission of CBGs correspond to different HARQ processes, multiple HARQ processes need to be signaled in a single DCI messages. To reduce the signaling overhead, a fixed offset (or other functional relationship) between multiple HARQ process IDs may be employed. For example, assuming that the HARQ process ID for retransmission of a CBG is k and that the fixed offset is 2, the HARQ process ID for initial transmission of TB can be derived as k + 2. In this case, the HARQ process ID for the initial transmission need not be explicitly included in the DCI.

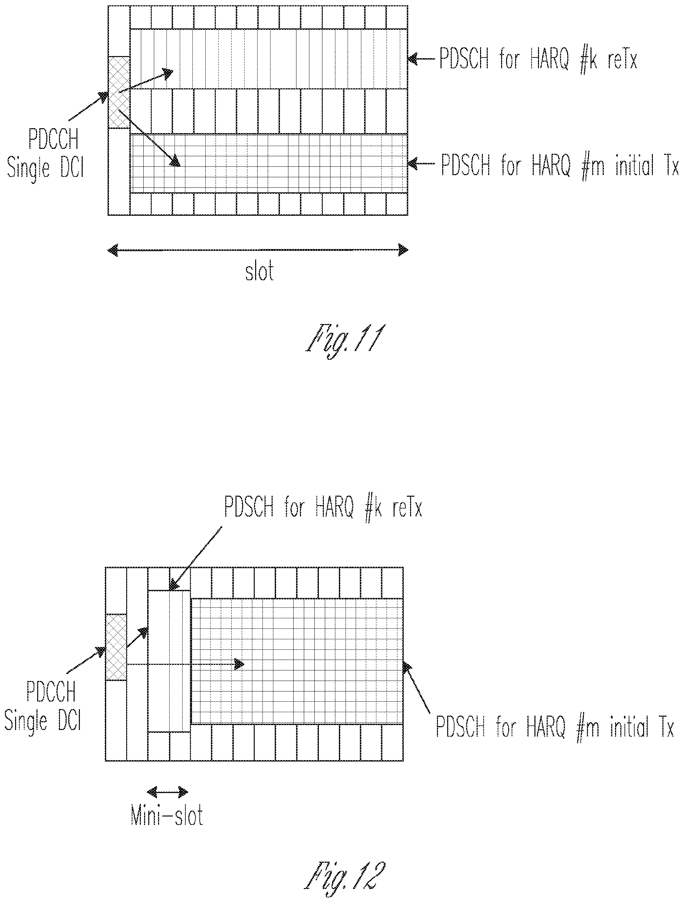

FIG. 11 and FIG. 12 illustrate two options of using a single DCI to schedule transmission of the new TB and retransmission of CBGs in the same slot for one UE. In the first option, illustrated by FIG. 11, PDSCHs corresponding to the transmission of the new TB and retransmission of CBGs are transmitted in different frequency resources. In the second option, illustrated by FIG. 12, PDSCHs corresponding to the transmission of the new TB and retransmission of CBGs are transmitted in different time resources. In particular, the mini-slot structure can be used to schedule the transmission of the new TB or retransmission of CBGs.

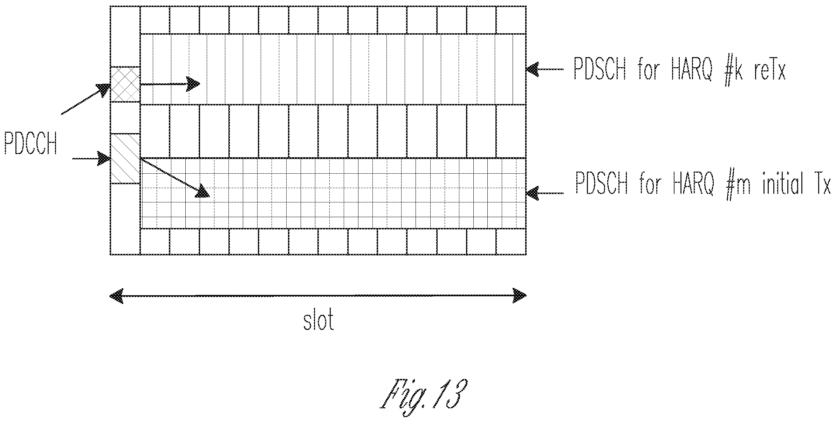

In a claimed embodiment, independent DCIs are used to schedule the transmission of the new TB and retransmission of CBGs in the same slot for one UE. In this case, the HARQ process IDs are signaled in the DCIs for the scheduling of the TB and the retransmitted CBGs. FIG. 13 illustrates one example of using independent DCIs to schedule the transmission of the new TB and retransmission of CBGs in the same slot for one UE. In this example, two DCI messages are transmitted and used to schedule the transmission of PDSCHs corresponding to the transmission of the new TB and retransmission of CBGs in different frequency resources.

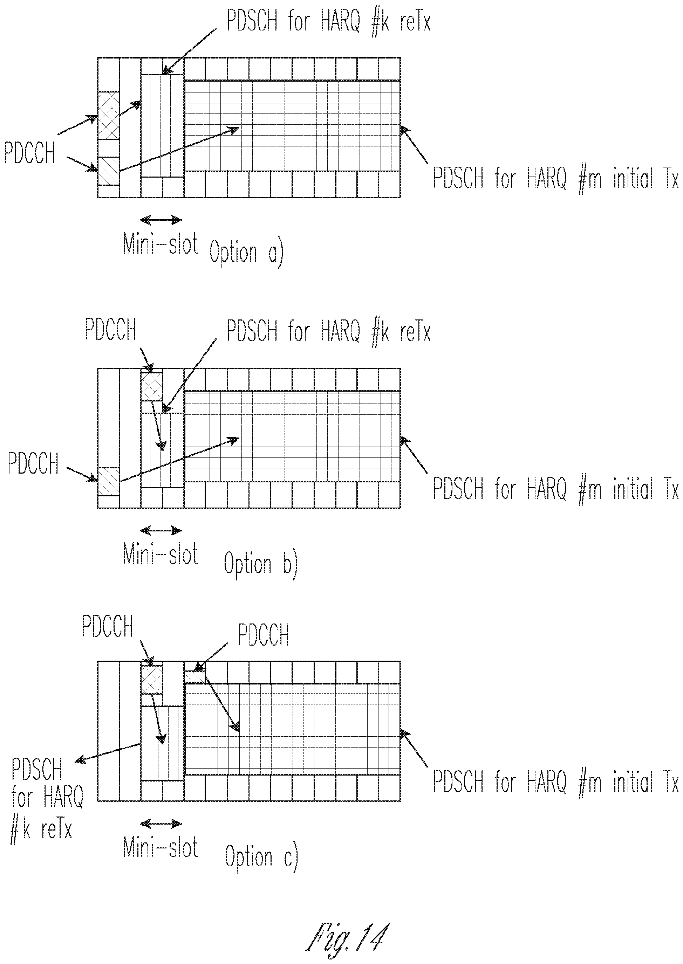

In other embodiments, the mini-slot structure may be used for the transmission of the new TB and/or retransmission of CBGs. FIG. 14 illustrates different options for using independent DCIs to schedule transmission of the new TB and retransmission of CBGs in the same slot for one UE with mini-slot structure. In option a), only the PDSCHs carrying the transmission of the new TB and retransmission of CBGs are based on the mini-slot structure. In the option b), the PDCCH for the scheduling of retransmission of CBGs and its associated PDSCH are based on the mini-slot structure. In option c), the PDCCHs for the scheduling of both transmission of the new TB and retransmission of CBGs and associated PDSCHs are based on the mini-slot structure.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in a number of environments such as part of a wireless local area network (WLAN), 3rd Generation Partnership Project (3GPP) Universal Terrestrial Radio Access Network (UTRAN), or Long-Term-Evolution (LTE) or a Long-Term-Evolution (LTE) communication system, although the scope of the disclosure is not limited in this respect. An example LTE system includes a number of mobile stations, defined by the LTE specification as User Equipment (UE), communicating with a base station, defined by the LTE specifications as an eNodeB.

Antennas referred to herein may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, antennas may be effectively separated to take advantage of spatial diversity and the different channel characteristics that may result between each of antennas and the antennas of a transmitting station. In some MIMO embodiments, antennas may be separated by up to 1/10 of a wavelength or more.

In some embodiments, a receiver as described herein may be configured to receive signals in accordance with specific communication standards, such as the Institute of Electrical and Electronics Engineers (IEEE) standards including IEEE 802.11-2007 and/or 802.11(n) standards and/or proposed specifications for WLANs, although the scope of the disclosure is not limited in this respect as they may also be suitable to transmit and/or receive communications in accordance with other techniques and standards. In some embodiments, the receiver may be configured to receive signals in accordance with the IEEE 802.16-2004, the IEEE 802.16(e) and/or IEEE 802.16(m) standards for wireless metropolitan area networks (WMANs) including variations and evolutions thereof, although the scope of the disclosure is not limited in this respect as they may also be suitable to transmit and/or receive communications in accordance with other techniques and standards. In some embodiments, the receiver may be configured to receive signals in accordance with the Universal Terrestrial Radio Access Network (UTRAN) LTE communication standards. For more information with respect to the IEEE 802.11 and IEEE 802.16 standards, please refer to "IEEE Standards for Information Technology -- Telecommunications and Information Exchange between Systems" - Local Area Networks - Specific Requirements - Part 11 "Wireless LAN Medium Access Control (MAC) and Physical Layer (PHY), ISO/IEC 8802-11: 1999", and Metropolitan Area Networks - Specific Requirements - Part 16: "Air Interface for Fixed Broadband Wireless Access Systems," May 2005 and related amendments/versions. For more information with respect to UTRAN LTE standards, see the 3rd Generation Partnership Project (3GPP) standards for UTRAN-LTE, release 8, March 2008, including variations and evolutions thereof.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims.

## Claims

1. An apparatus comprising:
processing circuitry (1401), wherein the processing circuitry is configured to cause a user equipment, UE (1400) to:
decode signaling to configure the UE for code-block group, CBG-based Hybrid Automatic Repeat Request, HARQ, operation;
wherein when the UE (1400) is configured for CBG-based HARQ operation, the processing circuitry (1401) is configured to cause the UE (1400) to:
decode a physical-downlink shared channel, PDSCH, that includes CBGs of a transport block;
generate respective HARQ acknowledgement, ACK, and non-acknowledgement, NACK, information bits for the CBGs for reception of the transport block, wherein an ACK or NACK corresponding to a particular CBG indicates that the code blocks of the particular CBG were decoded successfully or unsuccessfully, respectively;
encode the HARQ-ACK-NACK information bits for transmission to a base station (1300),
decode a downlink control information, DCI, for scheduling retransmission of the transport block;
if the DCI that schedules retransmission of the transport block includes a CBG indication, the processing circuitry is further configured to cause the UE (1400) to determine whether or not a CBG of the transport block is retransmitted by the base station based on a corresponding value of the CBG indication;
decode a second DCI for scheduling transmission of a second transport block; and
decode a second PDSCH that includes CBGs of the second transport block in the same slot as the scheduled retransmission of the transport block.

2. The apparatus of claim 1, wherein when the UE (1400) is not configured for CBG-based HARQ operation, the processing circuitry (1401) is configured to cause the UE (1400) to generate one HARQ-ACK-NACK information bit per transport block.

3. The apparatus of claims 1 to 2, wherein bits of the CBG indication:
have a one-to-one correspondence with the CBGs of the transport block; and
comprise a bitmap.

4. The apparatus of claims 1 to 3, wherein a retransmission of the transport block corresponding to a same HARQ process as a previous transmission of the transport block to the UE (1400), includes the same code blocks in a CBG as an initial transmission of the transport block.

5. The apparatus of claims 1 to 4 wherein the CBGs include cyclic redundancy checks, CRCs, and
wherein the processing circuitry (1401) is configured to cause the UE (1400) to decode the indication from the base station (1300) as to whether or not a CBG of the second transport block is a retransmission as a CBG index that is masked with the CRC for a corresponding CBG.

6. The apparatus of claims 1 to 5, wherein the DCI is decoded from a physical downlink control channel, PDCCH.

7. A non-transitory computer-readable storage medium that stores instructions for execution by processing circuitry (1401), wherein the processing circuitry is configured to cause a user equipment, UE (1400), to:
decode signaling to configure the UE (1400) for code-block group, (CBG-based Hybrid Automatic Repeat Request, HARQ, operation;
wherein when the UE (1400) is configured for CBG-based HARQ operation, the processing circuitry (1401) is configured to cause the UE (1400) to:
decode a physical-downlink shared channel, PDSCH, that includes CBGs of a transport block;
generate respective HARQ acknowledgement, ACK, and non-acknowledgement, NACK, information bits for the CBGs for reception of the transport block, wherein an ACK or NACK corresponding to a particular CBG indicates that the code blocks of the particular CBG were decoded successfully or unsuccessfully, respectively;
encode the HARQ-ACK-NACK information bits for transmission to a base station (1300),
decode a downlink control information, DCI, for scheduling retransmission of the transport block;
if the DCI that schedules retransmission of the transport block includes a CBG indication, the processing circuitry is configured to cause the UE (1400) to determine whether or not a CBG of the transport block is retransmitted by the base station based on a corresponding value of the CBG indication;
decode a second DCI for scheduling transmission of a second transport block; and
decode a second PDSCH that includes CBGs of the second transport block in the same slot as the scheduled retransmission of the transport block.

8. The computer-readable storage medium of claim 7, wherein when the UE is not configured for CBG-based HARQ operation, the processing circuitry (1401) is configured to cause the UE (1400) to generate one HARQ-ACK-NACK information bit per transport block.

9. The computer-readable storage medium of claims 7 to 8, wherein bits of the CBG indication have a one-to-one correspondence with the CBGs of the transport block.

10. The computer-readable storage medium of claim 7 to 9, wherein a retransmission of the transport block corresponding to a same HARQ process as a previous transmission of the transport block to the UE (1400), includes the same code blocks in a CBG as an initial transmission of the transport block.

11. A non-transitory computer-readable storage medium that stores instructions for execution by processing circuitry (1301) of a base station (1300), the processing circuitry (1301) being configured to cause the base station (1300) to:
encode signaling for transmission to a user equipment, UE (1400), to configure the (1400) UE for code-block group, CBG)based Hybrid Automatic Repeat Request, HARQ, operation;
wherein for the UE (1400) that is configured for CBG-based HARQ operation, the processing circuitry (1301) is configured to cause the base station (1300) to:
encode a physical-downlink shared channel, PDSCH, that includes a transport block comprising CBGs;
decode respective HARQ acknowledgement, ACK, and non-acknowledgement, NACK, information bits received from the UE (1400) for the CBGs for reception of the transport block, wherein an ACK or NACK corresponding to a particular CBG indicates that the code blocks of the particular CBG were decoded successfully or unsuccessfully, respectively;
based on the decoded HARQ-ACK-NACK information bits, encode a downlink control information, DCI, for scheduling retransmission of the transport block;
wherein to schedule retransmission the transport block, the processing circuitry (1301) is configured to cause the base station (1300) to encode the DCI to include a CBG indication, wherein CBGs that are to be retransmitted are indicated by a corresponding value of the CBG indication;
encode a second DCI for scheduling transmission of a second transport block; and
encode a second PDSCH that includes CBGs of the second transport block in the same slot as the scheduled retransmission of the transport block.

12. The computer-readable storage medium of claim 11, wherein for a UE (1400) that is not configured for CBG-based HARQ operation, the processing circuitry (1301) is configured to cause the base station (1300) to receive one HARQ-ACK-NACK information bit per transport block.

13. The computer-readable storage medium of claim 11 to 12, wherein the processing circuitry is configured to cause the base station (3400) to encode bits of the CBG indication to have a one-to-one correspondence with the CBGs of the transport block.

## Patentansprüche

1. Vorrichtung, umfassend:
eine Verarbeitungsschaltungsanordnung (1401), wobei die
Verarbeitungsschaltungsanordnung konfiguriert ist, um eine Benutzervorrichtung, UE (1400), zu Folgendem zu veranlassen:
Decodieren einer Signalisierung, um die UE für einen Code-Block-Gruppen-, CBG-basierten Hybrid Automatic Repeat Request-, HARQ-, Betrieb zu konfigurieren;
wobei, wenn die UE (1400) für einen CBG-basierten HARQ-Betrieb konfiguriert ist, die Verarbeitungsschaltungsanordnung (1401) konfiguriert ist, um die UE (1400) zu Folgendem zu veranlassen:
Decodieren eines Physical Downlink Shared Channel, PDSCH, der CBGs eines Transportblocks beinhaltet;
Erzeugen jeweiliger HARQ-Bestätigungs-, ACK-, und Nicht-Bestätigungs-, NACK-, Informationsbits für die CBGs zum Empfang des Transportblocks, wobei eine ACK oder NACK, die einem bestimmten CBG entspricht, angibt, dass die Codeblöcke des bestimmten CBG erfolgreich bzw. nicht erfolgreich decodiert wurden;
Codieren der HARQ-ACK-NACK-Informationsbits zur Übertragung an eine Basisstation (1300),
Decodieren einer Downlink-Steuerinformation, DCI, zum Planen einer Neuübertragung des Transportblocks;
wenn die DCI, die eine Neuübertragung des Transportblocks plant, eine CBG-Angabe beinhaltet, die Verarbeitungsschaltungsanordnung ferner konfiguriert ist, um die UE (1400) zu veranlassen, zu bestimmen, ob ein CBG des Transportblocks durch die Basisstation neuübertragen wird oder nicht, basierend auf einem entsprechenden Wert der CBG-Angabe;
Decodieren einer zweiten DCI zum Planen einer Übertragung eines zweiten Transportblocks; und
Decodieren eines zweiten PDSCH, der CBGs des zweiten Transportblocks in demselben Schlitz wie die geplante Neuübertragung des Transportblocks beinhaltet.

2. Vorrichtung nach Anspruch 1, wobei, wenn die UE (1400) nicht für einen CBG-basierten HARQ-Betrieb konfiguriert ist, die Verarbeitungsschaltungsanordnung (1401) konfiguriert ist, um die UE (1400) zu veranlassen, ein HARQ-ACK-NACK-Informationsbit pro Transportblock zu erzeugen.

3. Vorrichtung nach den Ansprüchen 1 bis 2, wobei Bits der CBG-Anzeige:
eine Eins-zu-Eins-Entsprechung mit den CBGs des Transportblocks aufweisen; und
eine Bitmap umfassen.

4. Vorrichtung nach den Ansprüchen 1 bis 3, wobei eine Neuübertragung des Transportblocks, die einem gleichen HARQ-Prozess wie eine vorherige Übertragung des Transportblocks an die UE (1400) entspricht, die gleichen Codeblöcke in einem CBG wie eine anfängliche Übertragung des Transportblocks beinhaltet.

5. Vorrichtung nach den Ansprüchen 1 bis 4, wobei die CBGs zyklische Redundanzprüfungen, CRCs, beinhalten, und
wobei die Verarbeitungsschaltungsanordnung (1401) konfiguriert ist, um die UE (1400) zu veranlassen, die Angabe von der Basisstation (1300), ob ein CBG des zweiten Transportblocks eine Neuübertragung ist oder nicht, als einen CBG-Index zu decodieren, der mit der CRC für einen entsprechenden CBG maskiert ist.

6. Vorrichtung nach den Ansprüchen 1 bis 5, wobei die DCI von einem Physical Downlink Control Channel, PDCCH, decodiert werden.

7. Nichtflüchtiges computerlesbares Speichermedium, das Anweisungen zur Ausführung durch eine Verarbeitungsschaltungsanordnung (1401) speichert, wobei die Verarbeitungsschaltungsanordnung konfiguriert ist, um eine Benutzervorrichtung, UE (1400), zu Folgendem zu veranlassen:
Decodieren einer Signalisierung, um die UE (1400) für einen Code-Block-Gruppen- (CBG-basierten Hybrid Automatic Repeat Request-, HARQ-, Betrieb zu konfigurieren;
wobei, wenn die UE (1400) für einen CBG-basierten HARQ-Betrieb konfiguriert ist, die Verarbeitungsschaltungsanordnung (1401) konfiguriert ist, um die UE (1400) zu Folgendem zu veranlassen:
Decodieren eines Physical Downlink Shared Channel, PDSCH, der CBGs eines Transportblocks beinhaltet;
Erzeugen jeweiliger HARQ-Bestätigungs-, ACK-, und Nicht-Bestätigungs-, NACK-, Informationsbits für die CBGs zum Empfang des Transportblocks, wobei eine ACK oder NACK, die einem bestimmten CBG entspricht, angibt, dass die Codeblöcke des bestimmten CBG erfolgreich bzw. nicht erfolgreich decodiert wurden;
Codieren der HARQ-ACK-NACK-Informationsbits zur Übertragung an eine Basisstation (1300),
Decodieren einer Downlink-Steuerinformation, DCI, zum Planen einer Neuübertragung des Transportblocks;
wenn die DCI, die eine Neuübertragung des Transportblocks plant, eine CBG-Angabe beinhaltet, die Verarbeitungsschaltungsanordnung konfiguriert ist, um die UE (1400) zu veranlassen, zu bestimmen, ob ein CBG des Transportblocks durch die Basisstation neuübertragen wird oder nicht, basierend auf einem entsprechenden Wert der CBG-Angabe;
Decodieren einer zweiten DCI zum Planen einer Übertragung eines zweiten Transportblocks; und
Decodieren eines zweiten PDSCH, der CBGs des zweiten Transportblocks in demselben Schlitz wie die geplante Neuübertragung des Transportblocks beinhaltet.

8. Computerlesbares Speichermedium nach Anspruch 7, wobei, wenn die UE nicht für einen CBG-basierten HARQ-Betrieb konfiguriert ist, die Verarbeitungsschaltungsanordnung (1401) konfiguriert ist, um die UE (1400) zu veranlassen, ein HARQ-ACK-NACK-Informationsbit pro Transportblock zu erzeugen.

9. Computerlesbares Speichermedium nach den Ansprüchen 7 bis 8, wobei Bits der CBG-Anzeige eine Eins-zu-Eins-Entsprechung mit den CBGs des Transportblocks aufweisen.

10. Computerlesbares Speichermedium nach den Ansprüchen 7 bis 9, wobei eine Neuübertragung des Transportblocks, die einem gleichen HARQ-Prozess wie eine vorherige Übertragung des Transportblocks an die UE (1400) entspricht, die gleichen Codeblöcke in einem CBG wie eine anfängliche Übertragung des Transportblocks beinhaltet.

11. Nichtflüchtiges computerlesbares Speichermedium, das Anweisungen zur Ausführung durch eine Verarbeitungsschaltungsanordnung (1301) einer Basisstation (1300) speichert, wobei die Verarbeitungsschaltungsanordnung (1301) konfiguriert ist, um die Basisstation (1300) zu Folgendem zu veranlassen:
Codieren einer Signalisierung zur Übertragung an eine Benutzervorrichtung, UE (1400), um die UE (1400) für einen Code-Block-Gruppen-, CBG-basierten Hybrid Automatic Repeat Request-, HARQ-, Betrieb zu konfigurieren;
wobei für die UE (1400), die für einen CBG-basierten HARQ-Betrieb konfiguriert ist, die Verarbeitungsschaltungsanordnung (1301) konfiguriert ist, um die Basisstation (1300) zu Folgendem zu veranlassen:
Codieren eines Physical Downlink Shared Channel, PDSCH, der einen Transportblock beinhaltet, der CBGs umfasst;
Decodieren jeweiliger HARQ-Bestätigungs-, ACK-, und Nicht-Bestätigungs-, NACK-, Informationsbits, die von der UE (1400) empfangen werden, für die CBGs zum Empfang des Transportblocks, wobei eine ACK oder NACK, die einem bestimmten CBG entspricht, angibt, dass die Codeblöcke des bestimmten CBG erfolgreich bzw. nicht erfolgreich decodiert wurden;
basierend auf den decodierten HARQ-ACK-NACK-Informationsbits, Codieren einer Downlink-Steuerinformation, DCI, zum Planen einer Neuübertragung des Transportblocks;
wobei zum Planen einer Neuübertragung des Transportblocks die Verarbeitungsschaltungsanordnung (1301) konfiguriert ist, um die Basisstation (1300) zu veranlassen, die DCI zu codieren, um eine CBG-Angabe zu beinhalten, wobei CBGs, die neuübertragen werden sollen, durch einen entsprechenden Wert der CBG-Angabe angegeben werden;
Codieren einer zweiten DCI zum Planen einer Übertragung eines zweiten Transportblocks; und
Codieren eines zweiten PDSCH, der CBGs des zweiten Transportblocks in demselben Schlitz wie die geplante Neuübertragung des Transportblocks beinhaltet.

12. Computerlesbares Speichermedium nach Anspruch 11, wobei für eine UE (1400), die nicht für einen CBG-basierten HARQ-Betrieb konfiguriert ist, die Verarbeitungsschaltungsanordnung (1301) konfiguriert ist, um die Basisstation (1300) zu veranlassen, ein HARQ-ACK-NACK-Informationsbit pro Transportblock zu empfangen.

13. Computerlesbares Speichermedium nach den Ansprüchen 11 bis 12, wobei die Verarbeitungsschaltungsanordnung konfiguriert ist, um die Basisstation (3400) zu veranlassen, Bits der CBG-Anzeige zu codieren, um eine Eins-zu-Eins-Entsprechung mit den CBGs des Transportblocks aufzuweisen.

## Revendications

1. Un appareil comprenant :
une circuiterie de traitement (1401), dans lequel la circuiterie de traitement est configurée pour amener un équipement utilisateur, UE, (1400) à :
décoder une signalisation pour configurer l'UE pour une opération de requête de répétition automatique hybride, HARQ, à base de groupe de blocs de code, CBG ;
dans lequel, quand l'UE (1400) est configuré pour une opération HARQ à base de CBG, la circuiterie de traitement (1401) est configurée pour amener l'UE (1400) à :
décoder un canal physique partagé de liaison descendante, PDSCH, qui comporte des CBG d'un bloc de transport ;
générer des bits d'information d'accusé de réception, ACK, et d'accusé de réception négatif, NACK, respectifs pour les CBG pour une réception du bloc de transport, dans lequel un ACK ou NACK correspondant à un CBG particulier indique que les blocs de code du CBG particulier ont été décodés avec succès ou sans succès, respectivement ;
coder les bits d'information HARQ-ACK-NACK pour une transmission à une station de base (1300),
décoder une information de contrôle de liaison descendante, DCI, pour la planification d'une retransmission du bloc de transport ;
si la DCI qui planifie une retransmission du bloc de transport comporte une indication de CBG, la circuiterie de traitement est configurée en outre pour amener l'UE (1400) à déterminer si un CBG du bloc de transport est ou non retransmis par la station de base sur la base d'une valeur correspondante de l'indication de CBG ;
décoder une deuxième DCI pour la planification d'une transmission d'un deuxième bloc de transport ; et
décoder un deuxième PDSCH qui comporte des CBG du deuxième bloc de transport dans le même slot comme la retransmission planifiée du bloc de transport.

2. L'appareil selon la revendication 1, dans lequel, quand l'UE (1400) n'est pas configuré pour une opération HARQ à base de CBG, la circuiterie de traitement (1401) est configurée pour amener l'UE (1400) à générer un bit d'information HARQ-ACK-NACK par bloc de transport.

3. L'appareil selon les revendications 1 à 2, dans lequel des bits de l'indication de CBG :
ont une correspondance biunivoque avec les CBG du bloc de transport ; et
comprennent un bitmap.

4. L'appareil selon les revendications 1 à 3, dans lequel une retransmission du bloc de transport correspondant à un même processus HARQ qu'une transmission précédente du bloc de transport à l'UE (1400) comporte les mêmes blocs de code dans un CBG qu'une transmission initiale du bloc de transport.

5. L'appareil selon les revendications 1 à 4, dans lequel les CBG comportent des contrôles de redondance cycliques, CRC, et
dans lequel la circuiterie de traitement (1401) est configurée pour amener l'UE (1400) à décoder l'indication provenant de la station de base (1300) comme la condition si un CBG du deuxième bloc de transport est ou non une retransmission comme un indice de CBG qui est masqué avec le CRC pour un CBG correspondant.

6. L'appareil selon les revendications 1 à 5, dans lequel la DCI est décodée à partir d'un canal physique de contrôle de liaison descendante, PDCCH.

7. Un support de stockage non transitoire lisible par calculateur qui stocke des instructions pour une exécution par une circuiterie de traitement (1401), dans lequel la circuiterie de traitement est configurée pour amener un équipement utilisateur, UE (1400) à :
décoder une signalisation pour configurer l'UE (1400) pour une opération de requête de répétition automatique hybride, HARQ, à base de groupe de blocs de code, CBG ;
dans lequel, quand l'UE (1400) est configuré pour une opération HARQ à base de CBG, la circuiterie de traitement (1401) est configurée pour amener l'UE (1400) à :
décoder un canal physique partagé de liaison descendante, PDSCH, qui comporte des CBG d'un bloc de transport ;
générer des bits d'information d'accusé de réception, ACK, et d'accusé de réception négatif, NACK, HARQ respectifs pour les CBG pour une réception du bloc de transport, dans lequel un ACK ou NACK correspondant à un CBG particulier indique que les blocs de code du CBG particulier ont été décodé avec succès ou sans succès, respectivement ;
coder les bits d'information HARQ-ACK-NACK pour une transmission à une station de base (1300),
décoder une information de contrôle de liaison descendante, DCI, pour la planification d'une retransmission du bloc de transport ;
si la DCI qui planifie une retransmission du bloc de transport comporte une indication de CBG, la circuiterie de traitement est configurée pour amener l'UE (1400) à déterminer si un CBG du bloc de transport est ou non retransmis par la station de base sur la base d'une valeur correspondante de l'indication de CBG ;
décoder une deuxième DCI pour la planification d'une transmission d'un deuxième bloc de transport ; et
décoder un deuxième PDSCH qui comporte des CBG du deuxième bloc de transport dans le même slot comme la retransmission planifiée du bloc de transport.

8. Le support de stockage lisible par calculateur selon la revendication 7, dans lequel, quand l'UE n'est pas configuré pour une opération HARQ à base de CBG, la circuiterie de traitement (1401) est configurée pour amener l'UE (1400) à générer un bit d'information HARQ-ACK-NACK par bloc de transport.

9. Le support de stockage lisible par calculateur selon les revendications 7 à 8, dans lequel des bits de l'indication de CBG ont une correspondance biunivoque avec les CBG du bloc de transport.

10. Le support de stockage lisible par calculateur selon les revendications 7 à 9, dans lequel une retransmission du bloc de transport correspondant à un même processus HARQ qu'une transmission précédente du bloc de transport à l'UE (1400), comporte les mêmes blocs de code dans un CBG qu'une transmission initiale du bloc de transport.

11. Un support de stockage non transitoire lisible par calculateur qui stocke des instructions pour une exécution par une circuiterie de traitement (1301) d'une station de base (1300), la circuiterie de traitement (1301) étant configurée pour amener la station de base (1300) à :
coder une signalisation pour une transmission à un équipement utilisateur, UE, (1400), pour configurer l'UE (1400) pour une opération de requête de répétition automatique hybride, HARQ, à base de groupe de blocs de code, CBG ;
dans lequel, pour l'UE (1400) qui est configuré pour une opération HARQ à base de CBG, la circuiterie de traitement (1301) est configurée pour amener la station de base (1300) à :
coder un canal physique partagé de liaison descendante, PDSCH, qui comporte un bloc de transport comprenant des CBG ;
décoder des bits d'information d'accusé de réception, ACK, et d'accusé de réception négatif, NACK, HARQ respectifs reçus à partir de l'UE (1400) pour les CBG pour une réception du bloc de transport, dans lequel un ACK ou NACK correspondant à un CBG particulier indique que les blocs de code du CBG particulier ont été décodés avec succès ou sans succès, respectivement ;
sur la base des bits d'information HARQ-ACK-NACK décodés, coder une information de contrôle de liaison descendante, DCI, pour la planification d'une retransmission du bloc de transport ;
dans lequel, pour planifier une retransmission du bloc de transport, la circuiterie de traitement (1301) est configurée pour amener la station de base (1300) à coder la DCI pour inclure une indication de CBG, dans lequel des CBG qui doivent être retransmis sont indiqués par une valeur correspondante de l'indication de CBG ;
coder une deuxième DCI pour la planification d'une transmission d'un deuxième bloc de transport ; et
coder un deuxième PDSCH qui comporte des CBG du deuxième bloc de transport dans le même slot comme la retransmission planifiée du bloc de transport.

12. Le support de stockage lisible par calculateur selon la revendication 11, dans lequel, pour un UE (1400) qui n'est pas configuré pour une opération HARQ à base de CBG, la circuiterie de traitement (1301) est configurée pour amener la station de base (1300) à recevoir un bit d'information HARQ-ACK-NACK par bloc de transport.

13. Le support de stockage lisible par calculateur selon les revendications 11 à 12, dans lequel la circuiterie de traitement est configurée pour amener la station de base (3400) à coder des bits de l'indication de CBG pour avoir une correspondance biunivoque avec les CBG du bloc de transport.
